# FASCICULE DE BREVET EUROPEEN

(11) **EP 2 955 000 B1**
(45) Date de publication et mention de la délivrance du brevet: **22.11.2017**
(21) Numéro de dépôt: 15305881.3
(22) Date de dépôt: 10.06.2015
(51) Int. Cl.: B29C 51/08, B29C 51/36, B29C 51/10, B29L 31/30

(54) **DISPOSITIF DE MOULE DE THERMOFORMAGE ET PROCÉDÉ DE FABRICATION LE METTANT EN OEUVRE**
FORMVORRICHTUNG ZUM WARMFORMEN, UND PRODUKTIONSVERFAHREN, BEI DER SIE ZUM EINSATZ KOMMT
THERMOFORMING MOULD DEVICE AND METHOD FOR MANUFACTURING SAME

(30) Priorité: 12.06.2014 FR 1455347
(43) Date de publication de la demande: 16.12.2015
(73) Titulaire: Reydel Automotive B.V., 3743 KN Baarn (NL)
(72) Inventeur: SAELEN, Marc, 59251 Allennes les Marais (FR)
(74) Mandataire: Nuss, Laurent

(56) Documents cités:
- EP-A1- 1 110 699
- EP-A2- 0 629 485
- WO-A2-2007/101868
- US-A1- 2013 221 698
- DATABASE WPI Week 199730 Thomson Scientific, London, GB; AN 1997-327806 XP002728859, -& JP H09 131785 A (HONDA MOTOR CO LTD) 20 mai 1997 (1997-05-20)

## Description

La présente invention concerne le domaine de la réalisation d'éléments de garniture ou d'habillage intérieur de véhicules automobiles, plus particulièrement les éléments de ce type comprenant ou constitués par une feuille ou plaque de matériau thermoplastique, conformée de manière adaptée et présentant ou non un motif en relief, formé dans la masse.

L'invention a plus spécifiquement pour objet un dispositif de moule pour la fabrication par formage sous pression négative de pièces à partir de feuilles ou de plaques, et un procédé de fabrication utilisant ce dispositif.

Différents procédés de fabrication de pièces par formage sous pression négative (plus connu sous la désignation anglaise "Negative Vacuum Forming") sont déjà connus dans l'état de la technique (voir par exemple : FR 2 900 862, US 2013/0221698).

Généralement, dans ce type de procédé, une feuille ou une plaque de matière plastique est préchauffée, puis placée entre deux parties de moule (ou demi-moules) qui la préforme durant la fermeture et, après fermeture totale du moule, un vide relatif est appliqué au niveau de la partie de moule venant en contact avec la face visible de la pièce, pour réaliser le formage définitif de la pièce. Eventuellement lors de l'appui sous pression du fait de l'aspiration surfacique, un motif en relief ou grainage est réalisé sur la surface visible (motif négatif présent sur la partie de moule soumise à aspiration).

Cette méthode de formage par vide présente de nombreux avantages parmi lesquels notamment une excellente qualité du motif et des déformations que doit comporter la surface visible, ainsi qu'une localisation précise de ces derniers.

Par les documents EP-A-0 629 485, WO-A-2007/101868, JP-A-H09 131785 et EP-A-1 110 699, on connaît déjà des dispositifs de moule de thermoformage pour la réalisation d'une pièce à paroi mince à partir d'une feuille en un matériau thermoplastique. Ces dispositifs de moule comprennent deux parties de moule avec des surfaces de travail de formes sensiblement complémentaires et dont l'une des parties au moins est mobile de manière à définir un état d'ouverture et un état de fermeture du moule, l'une des deux parties de moule comportant des moyens d'aspiration pour plaquer la feuille contre sa surface et la cavité formée entre les deux parties de moule étant sensiblement hermétiquement étanche à l'état de fermeture du moule.

Néanmoins, lorsque le motif doit être changé, même localement, et/ou si une ou plusieurs déformations particulière(s) est (sont) prévue(s), par exemple pour différentes versions d'une même pièce, il est nécessaire de disposer d'autant de parties de moule (au moins pour la face visible) que de versions de la pièce, même si certaines de ces versions ne se distinguent entre elles que par des différences mineures ou locales (modification de la taille ou de la forme d'un renfoncement de logement d'un accessoire, gestion de la présence/absence de zones localement déformées, création d'ébauches de zones de montage ou d'ancrage d'équipements ou d'éléments décoratifs saillants, ...)

En outre, le remplacement nécessaire des parties de moule entre deux phases de fabrication de versions différentes d'une même pièce fait chuter le rendement et la productivité de l'outillage et du personnel et nécessite l'acquisition de moyens spécifiques autorisant un changement rapide des parties du moule.

La présente invention a notamment pour but de pallier les inconvénients précités.

A cet effet, elle a pour objet un dispositif de moule de thermoformage pour la réalisation d'une pièce à paroi mince à partir d'une feuille en un matériau thermoplastique, ledit dispositif de moule comprenant deux parties de moule avec des surfaces de travail de formes sensiblement complémentaires et dont l'une des parties au moins est mobile de manière à définir un état d'ouverture et un état de fermeture du moule, l'une des deux parties de moule comportant des moyens d'aspiration pour plaquer la feuille contre sa surface et la cavité formée entre les deux parties de moule étant sensiblement hermétiquement étanche à l'état de fermeture du moule, dispositif de moule caractérisé en ce que l'une au moins des deux parties de moule comporte au moins un moyen de déformation locale d'une feuille présente dans ledit moule à l'état fermé, ledit ou chaque moyen comprenant une pièce de formage en creux avec un bord périphérique , pouvant être reliée sélectivement à une source d'aspiration ou de mise en dépression et pouvant être déplacée entre, d'une part, une position repliée, dans laquelle ladite pièce de formage est située au plus en affleurement avec la paroi de la pièce thermoformée, voire en retrait ou au plus en affleurement par rapport à la surface de la partie du moule portant ledit moyen de déformation locale et, d'autre part, une position déployée, dans laquelle ladite pièce de formage vient en application sous pression avec son bord périphérique contre la paroi de la pièce thermoformée en appui contre l'autre partie de moule.

L'invention concerne également un procédé de fabrication utilisant le dispositif de moule précité.

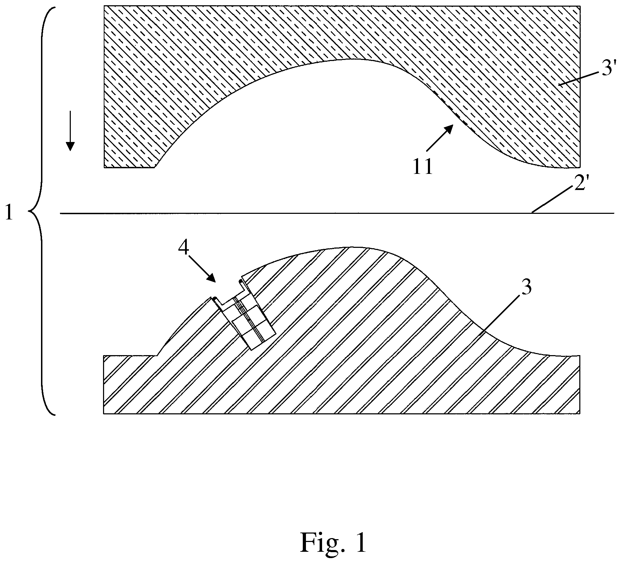

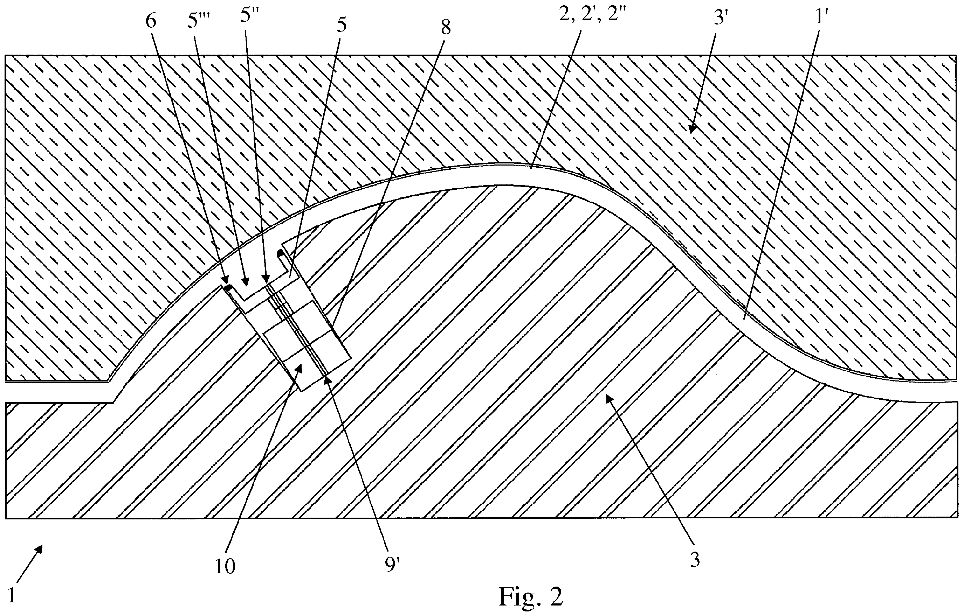

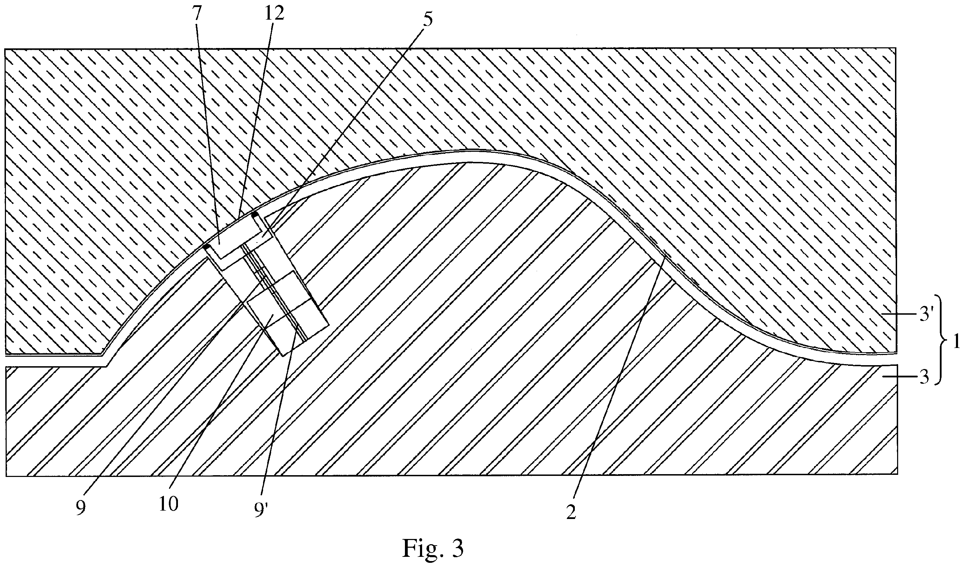

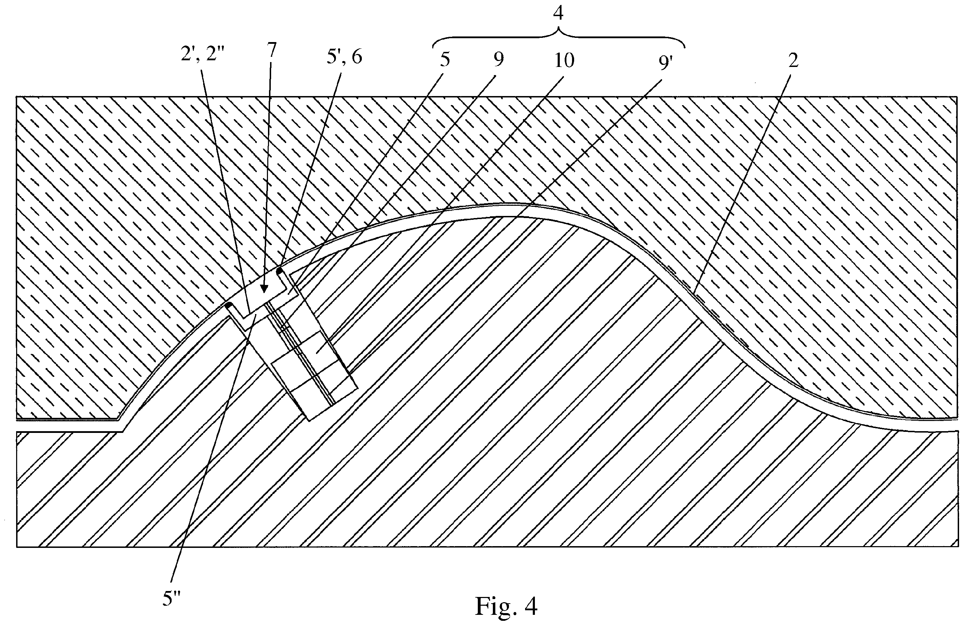

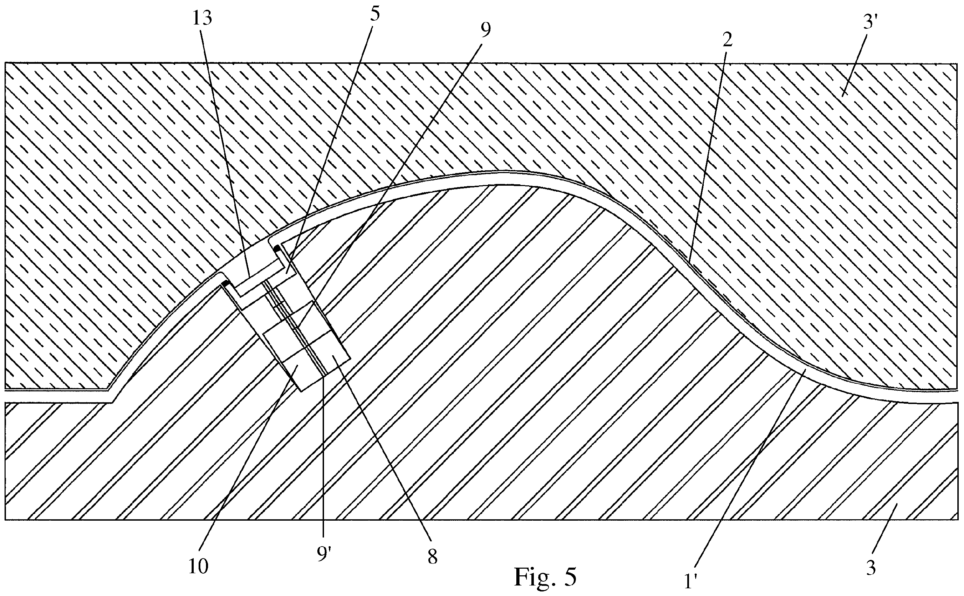

L'invention sera mieux comprise, grâce à la description ci-après, qui se rapporte à un mode de réalisation préféré, donné à titre d'exemple non limitatif, et expliqué avec référence aux dessins schématiques annexés, dans lesquels les figures 1 à 6 sont des vues schématiques en coupe et en élévation latérale d'un dispositif de moule selon l'invention, illustrant les différentes étapes opérationnelles consécutives de fabrication d'une pièce à paroi mince en accord avec le procédé selon l'invention, à savoir respectivement et successivement :
- Figure 1 : les deux parties du moule étant écartées (moule ouvert et vide), mise en place de la feuille thermoplastique, préférentiellement préchauffée ;
- Figure 2 : rapprochement des deux parties de moule (préformage de la pièce), puis fermeture étanche du moule et réalisation de l'aspiration pour conformer la pièce par application intime contre la partie de moule supérieure et éventuellement imprimer en relief un motif répétitif (version négative du motif présent sur la surface de la partie de moule supérieure) ;
- Figure 3 : déplacement en extension du moyen de déformation locale en contact avec la pièce/feuille conformée ;
- Figure 4 : application de vide au niveau du moyen de déformation locale (préférentiellement après suppression du vide au niveau de la partie de moule supérieure);
- Figure 5 : déplacement en rétractation du moyen de déformation locale dans sa position escamotée (après avoir enlevé le vide ou supprimé l'aspiration au niveau du moyen de déformation) ;
- Figure 6 : ouverture du moule et extraction de la pièce conformée.

Les figures des dessins annexés montrent un dispositif de moule de thermoformage pour la réalisation d'une pièce 2 à paroi 2" mince à partir d'une feuille 2 en un matériau thermoplastique.

Ce dispositif de moule 1 comprend deux parties de moule 3 et 3' (supérieure et inférieure dans l'exemple représenté) avec des surfaces de travail de formes sensiblement complémentaires et dont l'une des parties au moins est mobile de manière à définir un état d'ouverture et un état de fermeture du moule. De plus, l'une 3' des deux parties de moule 3,3' comporte des moyens d'aspiration pour plaquer la feuille 2 contre sa surface et la cavité 1' formée entre les deux parties de moule 3 et 3' étant sensiblement hermétiquement étanche à l'état de fermeture du moule.

Pour des raisons de simplification des représentations, les moyens d'étanchéité, d'aspiration sous vide et de déplacement des parties de moule 3,3' ne sont pas représentés sur les figures annexés.

Conformément à l'invention, l'une 3 au moins des deux parties de moule 3, 3' comporte au moins un moyen 4 de déformation locale d'une feuille 2' présente dans ledit moule 3, 3' à l'état fermé, ledit ou chaque moyen 4 comprenant une pièce 5 de formage en creux avec un bord périphérique 5', pouvant être reliée sélectivement à une source d'aspiration ou de mise en dépression et pouvant être déplacée entre, d'une part, une position repliée, dans laquelle ladite pièce de formage 5 est située au plus en affleurement avec la paroi 2" de la pièce thermoformée 2, voire en retrait ou au plus en affleurement par rapport à la surface de la partie du moule 3 portant ledit moyen de déformation locale 4 et, d'autre part, une position déployée, dans laquelle ladite pièce de formage 5 vient en application sous pression avec son bord périphérique 5' contre la paroi 2" de la pièce thermoformée 2 en appui contre l'autre partie de moule 3'.

L'homme du métier comprend aisément qu'avec les dispositions précédentes, il est possible, avec un même dispositif de moule 1, de réaliser différentes versions d'une même pièce 2, à savoir : sans aucune zone 13 localement déformée, avec une ou certaines zone(s) 13 présente(s), ou encore avec l'ensemble des zones 13 précédentes, lorsqu'une pluralité de moyens 4 sont prévus et qu'aucun, certains ou tous sont utilisés durant la fabrication de la pièce 2 concernée. De plus, ces différentes versions peuvent être fabriquées dans un ordre voulu et choisi (ou imposé par les commandes) sans impacter la productivité, ni le rendement en terme de pièces produites, à l'exception du temps supplémentaire nécessaire pour réaliser la ou les déformations locales additionnelles. Toutefois, une partie au moins de cette durée est en tout état de cause nécessaire pour permettre un refroidissement suffisant de la pièce 2 fraîchement formée dans le moule.

En vue d'éviter toute perte de dépression localement, le bord périphérique 5' est avantageusement pourvu d'un joint de compression 5" permettant de délimiter, lors d'un contact sous pression, une chambre 7 sensiblement étanche avec la paroi 2" de la pièce thermoformée 2.

Le bord 5' présente en outre un profil (surtout une face interne de profil de bord) adapté à la forme recherchée pour le bord 13' de la zone déformée 13, en particulier au moins légèrement arrondie ou courbe pour éviter la rupture de la feuille 2' et donc de la paroi 2" de la pièce 2. Ainsi, la forme du bord 5' (en fait la conformation du côté intérieur de ce bord) détermine la forme du bord 13' de la zone localement déformée 13 de la pièce 2.

Bien que d'autres constructions puissent être envisagées, il est avantageusement prévu que la pièce de formage en creux 5 soit montée mobile, éventuellement avec guidage en translation dans un logement 8 ménagé dans la partie de moule 3 concernée, ledit guidage étant préférentiellement également assuré en position déployée de ladite pièce de formage 5.

En accord avec un mode de réalisation de l'invention, ressortant des figures 1 à 6 annexés, la pièce de formage en creux 5, avantageusement en forme de coquille, est montée sur au moins un axe support 9, préférentiellement de manière aisément interchangeable, lequel présente un canal d'aspiration, ou est traversé par un conduit d'aspiration 9' relié à au moins un orifice traversant 5" ou à des canaux secondaires, ménagé(s) dans la paroi de ladite pièce de formage et débouchant sur la face interne de conformation 5'" de ladite pièce 5 de formage.

Selon une variante constructive pratique, le déplacement bidirectionnel de la pièce de formage en creux 5 est réalisée par l'intermédiaire d'un vérin 10 pneumatique ou hydraulique, monté et positionné sur ou dans la partie de moule 3 recevant la pièce de formage en creux 5, le guidage en coulissement de ladite pièce 5 étant réalisé par le vérin 10 et/ou par une structure de guidage particulière additionnelle.

Le mode de réalisation représenté à titre d'exemple sur les figures annexées ne montre qu'un seul moyen 4.

Néanmoins, en variante, et bien que non représentés, au moins deux moyens de déformation locale 4, montés dans la même partie de moule 3, 3' ou non et activables sélectivement et indépendamment, peuvent être prévus.

Comme illustré également à titre d'exemple sur les figures 1 à 6, le ou les moyens de déformation locale 4 est(sont) installé(s) sur une première partie de moule 3, et la seconde partie de moule 3' présente une surface de travail avec un motif répétitif 11, notamment une surface grainée, et est munie de moyens d'aspiration répartis (non-représentés) permettant une application intime par succion de la feuille 2' contre ladite surface à motif répétitif 11.

Pour aboutir à une encore plus grande universalité du dispositif de moule 1, en particularité une plus grande polyvalence en terme de fabrication de versions différentes de la pièce 2, la ou chaque pièce de formage en creux 5 peut être fixée de manière amovible et interchangeable sur l'axe support 9 ou la tige de vérin 10.

L'invention a également pour objet un procédé de fabrication d'une pièce 2 à paroi mince à partir d'une feuille 2' en un matériau thermoplastique, par mise en oeuvre du dispositif 1 de moule décrit précédemment, ladite pièce 2 devant ou non comprendre au moins une zone localisée 13 présentant une configuration particulière.

Ce procédé consiste à mettre en place une feuille 2', éventuellement soumise à un préchauffage, entre les deux parties de moule 3 et 3' à fermer ledit moule pour former une cavité étanche l'entre les deux parties de moule, et éventuellement préformer ladite feuille 2', puis à conformer ladite feuille par déformation plastique par son application intime contre la surface de l'une des parties du moule sous l'effet d'une succion ou d'une aspiration de manière à réaliser la pièce 2, et enfin à ouvrir le moule et à en extraire la pièce thermoformée résultante.

Conformément à l'invention, ce procédé consiste en outre, de manière sélective et en fonction de la version de la pièce 2 à obtenir, à réaliser le cas échéant au moins une déformation locale de la feuille 2', après conformation de la feuille 2' par application contre l'une additionnelle des deux parties de moule 3, 3' et alors que cette dernière est dans un état autorisant sa déformation plastique, ladite ou chaque déformation locale 13 étant effectuée par aspiration de la portion de feuille 12 concernée dans une pièce de formage en creux 5, montée dans l'une des deux parties de moule 3, 3', et déplacée en application contre la paroi 2" de la feuille 2'.

Selon une caractéristique avantageuse de l'invention, l'étape de réalisation d'une déformation locale de la feuille 2' consiste à effectuer les opérations suivantes :
- déplacement de la pièce de formage en creux 5 depuis sa position repliée jusqu'à une position déployée dans laquelle elle vient en appui sous pression contrôlée contre la feuille 2' formant la paroi 2" de la pièce 2 ;
- application d'une aspiration ou réalisation d'une dépression dans la pièce de formage 5 de manière à déformer localement la feuille 2' et à la plaquer intimement contre la surface de la face interne de conformation 5'" de ladite pièce de formage 5 ;
- coupure de l'aspiration ou suppression de la dépression ;
- déplacement de la pièce de formage 5 vers sa position repliée.

A titre d'exemple, et en particulier lorsque la feuille 2 est constituée d'un matériau du type polyéthylène, polypropylène ou encore polychlorure de vinyl, ladite feuille 2 est préchauffée pour être à une température d'environ 180°C à 210°C durant la phase de formage par aspiration, la phase consécutive optionnelle de déformation locale par l'intermédiaire du moyen 4 étant effectuée lorsque le matériau se trouve encore dans un état déformable plastiquement, à savoir à une température d'environ 150°C à 170°C.

Dans un contexte de gestion de production optimisée, le procédé peut consister à produire sélectivement, sur une période de production déterminée, et en fonction d'un programme de fabrication donné résultant par exemple d'un regroupement de commandes clients diversifiées en termes de version de la pièce 1 souhaitée, des pièces 2 comportant ou non une ou plusieurs zone(s) 13 locale(s) à déformation ou configuration particulières.

Dans le contexte précité, le procédé peut en outre consister, entre deux cycles ou programmes de fabrication de pièces 2 de versions différentes et devant présenter une ou des zone(s) 13 localement déformée(s) de configuration(s) et d'aspect(s) différents, à interchanger une ou plusieurs pièce(s) de formage en creux 5.

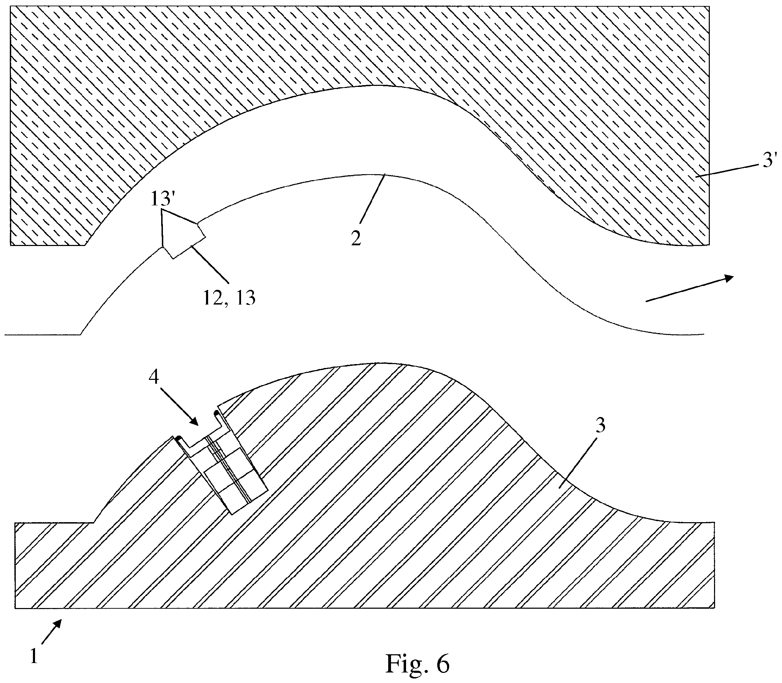

Enfin, comme le montre la figure 6, le sujet porte aussi sur un élément de garniture ou d'habillage intérieur soit formé par une pièce 2 thermoformée à paroi 2" mince, soit comprenant une face apparente fournie par une telle pièce 2. Cette pièce 2 comporte au moins une zone localisée 13 présentant une déformation locale de sa paroi 2" ou une configuration locale particulière, notamment une déformation en creux, et fait préférentiellement état en surface d'un motif ou relief répétitif 11.

En accord avec l'invention, la pièce thermoformée 2 est obtenue par l'intermédiaire du procédé de fabrication décrit précédemment et comporte au moins une déformation en creux 13, formant par exemple un logement pour la réception d'un accessoire, ainsi qu'éventuellement un motif en relief répétitif, présent sur toute la surface de ladite pièce 2.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de moule de thermoformage pour la réalisation d'une pièce à paroi mince à partir d'une feuille en un matériau thermoplastique, ledit dispositif de moule comprenant deux parties de moule avec des surfaces de travail de formes sensiblement complémentaires et dont l'une des parties au moins est mobile de manière à définir un état d'ouverture et un état de fermeture du moule, l'une des deux parties de moule comportant des moyens d'aspiration pour plaquer la feuille contre sa surface et la cavité formée entre les deux parties de moule étant sensiblement hermétiquement étanche à l'état de fermeture du moule,
dispositif de moule (1) **caractérisé en ce que** l'une (3) au moins des deux parties de moule (3, 3') comporte au moins un moyen (4) de déformation locale d'une feuille (2') présente dans ledit moule (3, 3') à l'état fermé, ledit ou chaque moyen (4) comprenant une pièce (5) de formage en creux avec un bord périphérique (5'), pouvant être reliée sélectivement à une source d'aspiration ou de mise en dépression et pouvant être déplacée entre, d'une part, une position repliée, dans laquelle ladite pièce de formage (5) est située au plus en affleurement avec la paroi (2") de la pièce thermoformée (2), voire en retrait ou au plus en affleurement par rapport à la surface de la partie du moule (3) portant ledit moyen de déformation locale (4) et, d'autre part, une position déployée, dans laquelle ladite pièce de formage (5) vient en application sous pression avec son bord périphérique (5') contre la paroi (2") de la pièce thermoformée (2) en appui contre l'autre partie de moule (3').

2. Dispositif de moule selon la revendication 1, **caractérisé en ce que** le bord périphérique (5') de la pièce de formage (5) est pourvu d'un joint de compression (5") permettant de délimiter, lors d'un contact sous pression, une chambre (7) sensiblement étanche avec la paroi (2") de la pièce thermoformée (2).

3. Dispositif de moule selon l'une quelconque des revendications 1 et 2, **caractérisé en ce que** la pièce de formage en creux (5) est montée mobile, éventuellement avec guidage en translation dans un logement (8) ménagé dans la partie de moule (3) concernée, ledit guidage étant préférentiellement également assuré en position déployée de ladite pièce de formage (5).

4. Dispositif de moule selon l'une quelconque des revendications 1 à 3, **caractérisé en ce que** la pièce de formage en creux (5), avantageusement en forme de coquille, est montée sur au moins un axe support (9), préférentiellement de manière aisément interchangeable, lequel présente un canal d'aspiration, ou est traversé par un conduit d'aspiration (9') relié à au moins un orifice traversant (5") ou à des canaux secondaires, ménagé(s) dans la paroi de ladite pièce de formage et débouchant sur la face interne de conformation (5"') de ladite pièce (5) de formage.

5. Dispositif de moule selon l'une quelconque des revendications 1 à 4, **caractérisé en ce que** le déplacement bidirectionnel de la pièce de formage en creux (5) est réalisée par l'intermédiaire d'un vérin (10) pneumatique ou hydraulique, monté et positionné sur ou dans la partie de moule (3) recevant la pièce de formage en creux (5), le guidage en coulissement de ladite pièce (5) étant réalisé par le vérin (10) et/ou par une structure de guidage particulière additionnelle.

6. Dispositif de moule selon l'une quelconque des revendications 1 à 5, **caractérisé en ce qu'**au moins deux moyens de déformation locale (4), montés dans la même partie de moule (3, 3') ou non et activables sélectivement et indépendamment, sont prévus.

7. Dispositif de moule selon l'une quelconque des revendications 1 à 6, **caractérisé en ce que** le ou les moyens de déformation locale (4) est(sont) installé(s) sur une première partie de moule (3), et **en ce que** la seconde partie de moule (3') présente une surface de travail avec un motif répétitif (11), notamment une surface grainée, et est munie de moyens d'aspiration répartis permettant une application intime par succion de la feuille (2') contre ladite surface à motif répétitif (11).

8. Dispositif de moule selon l'une quelconque des revendications 4 et 5, **caractérisé en ce que** la ou chaque pièce de formage en creux (5) est fixée de manière amovible et interchangeable sur l'axe support (9) ou la tige de vérin (10).

9. Procédé de fabrication d'une pièce à paroi mince à partir d'une feuille en un matériau thermoplastique, par mise en oeuvre du dispositif de moule selon l'une quelconque des revendications 1 à 8, ladite pièce devant ou non comprendre au moins une zone localisée présentant une configuration particulière, ledit procédé consistant à mettre en place une feuille, éventuellement soumise à un préchauffage, entre les deux parties de moule, à fermer ledit moule pour former une cavité étanche entre les deux parties de moule, et éventuellement préformer ladite feuille, et à conformer ladite feuille par déformation plastique par son application intime contre la surface de l'une des parties du moule sous l'effet d'une succion ou d'une aspiration de manière à réaliser la pièce, à ouvrir le moule et à en extraire la pièce thermoformée résultante,
procédé **caractérisé en ce qu'**il consiste en outre, de manière sélective et en fonction de la version de la pièce (2) à obtenir, à réaliser le cas échéant au moins une déformation locale de la feuille (2'), après conformation de la feuille (2') par application contre l'une additionnelle des deux parties de moule (3, 3') et alors que cette dernière est dans un état autorisant sa déformation plastique, ladite ou chaque déformation locale (13) étant effectuée par aspiration de la portion de feuille (12) concernée dans une pièce de formage en creux (5), montée dans l'une des deux parties de moule (3, 3'), et déplacée en application contre la paroi (2") de la feuille (2').

10. Procédé de fabrication selon la revendication 9, **caractérisé en ce que** l'étape de réalisation d'une déformation locale de la feuille (2') consiste à effectuer les opérations suivantes :
- déplacement de la pièce de formage en creux (5) depuis sa position repliée jusqu'à une position déployée dans laquelle elle vient en appui sous pression contrôlée contre la feuille (2') formant la paroi (2") de la pièce (2) ;
- application d'une aspiration ou réalisation d'une dépression dans la pièce de formage (5) de manière à déformer localement la feuille (2') et à la plaquer intimement contre la surface de la face interne de conformation (5"') de ladite pièce de formage (5) ;
- coupure de l'aspiration ou suppression de la dépression ;
- déplacement de la pièce de formage (5) vers sa position repliée.

11. Procédé de fabrication selon la revendication 9 ou 10, **caractérisé en ce qu'**il consiste à produire sélectivement, sur une période de production déterminée, et en fonction d'un programme de fabrication donné résultant par exemple d'un regroupement de commandes clients diversifiées en termes de version de la pièce (1) souhaitée, des pièces (2) comportant ou non une ou plusieurs zone(s) (13) locale(s) à déformation ou configuration particulières.

12. Procédé de fabrication selon l'une quelconque des revendications 9 à 11, **caractérisé en ce qu'**il consiste, entre deux cycles ou programmes de fabrication de pièces (2) de versions différentes et devant présenter une ou des zone(s) (13) localement déformée(s) de configuration(s) et d'aspect(s) différents, à interchanger une ou plusieurs pièce(s) de formage en creux (5).

## Patentansprüche

1. Formvorrichtung zum Warmformen zum Realisieren eines dünnen Wandteils aus einer thermoplastischen Platte, wobei die Formvorrichtung zwei Formbereiche mit Arbeitsflächen umfasst, die im Wesentlichen deckungsgleich sind, und von denen mindestens ein Bereich beweglich ist, so dass ein offener Zustand und ein geschlossener Zustand der Form definiert wird, wobei einer der Formbereiche Ansaugvorrichtungen einschließt, um die Platte gegen seine Oberfläche zu pressen, und der Hohlraum, der zwischen den zwei Bereichen der Form gebildet wird, ist im Wesentlichen hermetisch dicht, wenn die Form geschlossen ist;
wobei die Formvorrichtung (1) **dadurch gekennzeichnet ist, dass** einer (3) der mindestens zwei Bereiche der Form (3, 3') mindestens ein lokales Verformungsmittel (4) für eine Platte (2') aufweist, die in der Form (3, 3') in geschlossenem Zustand vorhanden ist, wobei das oder jedes Mittel (4) ein hohles Formteil (5) mit einer umlaufenden Kante (5') aufweist, das selektiv mit einer Saugdruckquelle oder Druckquelle verbunden werden kann und einerseits zwischen einer eingezogenen Position, in der das Formteil (5) sich höchstens bündig mit der Wand (2") des warmgeformten Teils (2), hinter der oder höchstens bündig in Bezug auf die Oberfläche der Form (3) gesehen, die diese lokale Verformungsvorrichtung (4) trägt, befindet, und andererseits einer ausgezogenen Position, in der das Formteil (5) bei unter Druckanwendung mit der umlaufenden Kante (5') gegen die Wand (2") des warmverformten Teils (2) gegen das andere Teil der Form (3') gedrückt wird, verschoben werden kann.

2. Formvorrichtung nach Anspruch 1, **dadurch gekennzeichnet, dass** die umlaufende Kante (5') des Formteils (5) mit einer Kompressionsdichtung (5") ausgestattet ist, die bei einem Druckkontakt ermöglicht, dass eine Kammer (7) im Wesentlichen dicht mit der Wand (2") des warmgeformten Teils (2) abschließt.

3. Formvorrichtung nach einem der Ansprüche 1 und 2, **dadurch gekennzeichnet, dass** das hohle Formteil (5) beweglich montiert ist, gegebenenfalls mit einer Führung in einem Gehäuse (8), die in dem entsprechenden Formbereich (3) angeordnet ist, wobei die Führung bevorzugt ebenso in der ausgezogenen Form des Formteils (5) gesichert ist.

4. Formvorrichtung nach einem der Ansprüche 1 bis 3, **dadurch gekennzeichnet, dass** das hohle Formteil (5), vorteilhafterweise in Form einer Muschel, mindestens auf einer Trägerachse (9) montiert ist, bevorzugt auf eine Weise, so dass sie leicht auszutauschen ist, die einen Ansaugkanal (9') aufweist, der mindestens mit einer Durchgangsöffnung (5") oder Nebenkanälen verbunden ist, die in der Wand des Formteils angeordnet sind, und in die innere Formseite (5"') des Formteils (5) mündet.

5. Formvorrichtung nach einem der Ansprüche 1 bis 4, **dadurch gekennzeichnet, dass** die Verschiebung in zwei Richtungen des hohlen Formteils (5) mittels eines pneumatischen oder hydraulischen Zylinders (10) erreicht wird, der auf oder in dem Formbereich (3) montiert oder positioniert ist, der das hohle Formteil (5) aufnimmt, wobei die Gleitführung des Teils (5) durch den Zylinder (10) und/oder durch eine separate zusätzliche Führungsstruktur erreicht wird.

6. Formvorrichtung nach einem der Ansprüche 1 bis 5, **dadurch gekennzeichnet, dass** mindestens zwei Verformungsmittel (4) vorgesehen sind, die in demselben Bereich der Form (3, 3') oder nicht im selben Bereich der Form angeordnet sind und die selektiv und unabhängig voneinander aktivierbar sind.

7. Formvorrichtung nach einem der Ansprüche 1 bis 6, **dadurch gekennzeichnet, dass** das oder die lokalen Verformungsmittel (4) in einem ersten Bereich der Form (3) montiert ist (sind), und dadurch, dass der zweite Bereich der Form (3') eine Arbeitsfläche mit einem sich wiederholenden Motiv (11) aufweist, insbesondere eine gekörnte Oberfläche, und mit Ansaugmitteln ausgestattet ist, die eine enge Auflage der Platte (2') auf der Oberfläche mit sich wiederholendem Motiv (11) ermöglichen.

8. Formvorrichtung nach einem der Ansprüche 4 und 5, **dadurch gekennzeichnet, dass** das oder jedes hohle Formteil (5) lösbar und austauschbar auf der Trägerachse (9) oder der Kolbenstange (10) befestigt ist.

9. Herstellungsverfahren eines dünnen Wandteils aus einer Platte aus einem thermoplastischen Material, durch Einsatz der Formvorrichtung nach einem der Ansprüche 1 bis 8, wobei das Teil mindestens einen begrenzten Bereich umfassen muss oder auch nicht, der eine bestimmte Konfiguration aufweist, wobei das Verfahren darin besteht, eine Platte zwischen zwei Bereichen der Form zu platzieren, sie gegebenenfalls einem Vorheizschritt zu unterziehen, die Form zu schließen, um einen dichten Hohlraum zwischen den zwei Bereichen der Form zu bilden, und Anpassen der Platte durch plastische Verformung, durch enganliegendes Auflegen auf die Oberfläche eines der Bereiche der Form, unter einer Saugwirkung und auf eine Weise, dass das Teil realisiert wird, Öffnen der Form und Entnehmen des daraus resultierenden warmgeformten Teils,
wobei das Verfahren **dadurch gekennzeichnet ist, dass** es unter anderem darin besteht, auf selektive Weise und abhängig von der Art des zu erhaltenden Teils (2) gegebenenfalls eine lokale Deformierung der Platte (2') durchzuführen, nachdem die Platte (2') durch Auflegen auf einen weiteren der zwei Bereiche der Form (3, 3') gestaltet wurde, und während diese in einem Zustand ist, der eine plastische Verformung zulässt, wobei die oder jede plastische Verformung (13) durch Ansaugen des jeweiligen Abschnitts der Platte (12) in ein hohles Formteil (5) durchgeführt wird, das in einem der zwei Bereiche der Form (3, 3') montiert ist und bei der Anwendung gegen die Wand (2") der Platte (2') verschoben wird.

10. Herstellungsverfahren nach Anspruch 9, **dadurch gekennzeichnet, dass** der Schritt der Umsetzung einer lokalen Verformung der Platte (2') darin besteht, die folgenden Schritte durchzuführen:
- Verschieben des hohlen Formteils (5) von seiner eingezogenen Position bis zu einer ausgezogenen Position, in der es unter kontrolliertem Druck gegen die Platte (2') gedrückt wird, die die Wand (2") des Teils (2) bildet;
- Anwendung eines Saugdrucks oder Umsetzung eines nach unten gerichteten Drucks in dem Formteil (5) auf eine Weise, dass die Platte (2') lokal verformt wird und sie eng gegen die innere Formfläche (5"') des Formteils (5) gepresst wird;
- Abschalten des Saugdrucks oder Aufheben des Drucks;
- Verschieben des Formteils (5) zu seiner eingefahrenen Position.

11. Herstellungsverfahren nach Anspruch 9 oder 10, **dadurch gekennzeichnet, dass** es darin besteht, selektiv über eine vorbestimmte Herstellungsdauer und gemäß eines gegebenen Produktionsprogramms, das sich beispielsweise aus einer Bündelung von unterschiedlichen Kundenbestellungen in Bezug auf die Version eines gewünschtes Teil (1) ergibt, Teile (2) zu produzieren, die einen oder mehrere lokale(n) Formbereich(e) (13) oder besondere Konfigurationen aufweisen.

12. Herstellungsverfahren nach einem der Ansprüche 9 bis 11, **dadurch gekennzeichnet, dass** zwischen zwei Zyklen oder Programmen zur Herstellung von Teilen (2) in unterschiedlichen Versionen, und bevor das Produkt einen oder mehrere lokal deformierte Bereich(e) (13) mit unterschiedlichem Konfigurationen und Aussehen aufweist, ein oder mehrere hohle(s) Formteil(e) (5) ausgetauscht wird (werden).

## Claims

1. A thermoforming mould device for manufacturing a thin-walled part from a sheet made of a thermoplastic material, said mould device including two mould portions with work surfaces with substantially complementary shapes, and of which at least one of the portions is movable so as to define an open state and a closed state of the mould, one of the two mould portions comprising suction means for flattening the sheet against the surface thereof, and the cavity formed between the two mould portions being substantially hermetically sealed in the closed state of the mould, mould device (1) **characterized in that** at least one (3) of the two mould portions (3, 3') comprises at least one means (4) for locally deforming a sheet (2') present in said mould (3, 3') in the closed state, said means or each means (4) including a recessed forming part (5) with a peripheral edge (5') which can be selectively connected to a suction source or a low pressure source and which can be moved between, on the one hand, a folded back position, in which said forming part (5) is located at most flush with the wall (2") of the thermoformed part (2), or retracted or at most flush with respect to the surface of the portion of the mould (3) supporting said local deformation means (4), and, on the other hand, a deployed position, in which said forming part (5) is applied under pressure with the peripheral edge (5') thereof against the wall (2") of the thermoformed part (2) bearing against the other mould portion (3').

2. The mould device according to claim 1, **characterized in that** the peripheral edge (5') of the forming part (5) is provided with a compression seal (5") for delimiting, when there is contact under pressure, a substantially sealed chamber (7) with the wall (2") of the thermoformed part (2).

3. The mould device according to either of claims 1 and 2, **characterized in that** the recessed forming part (5) is mounted movably, possibly with translational guiding in an accommodation (8) made in the mould portion (3) in question, said guiding being preferably also ensured in deployed position of said forming part (5).

4. The mould device according to any one of claims 1 to 3, **characterized in that** the recessed forming part (5), which is advantageously shell shaped, is mounted on at least one support shaft (9), preferably in such a manner that it is easily interchangeable, which has a suction channel or which is passed through by a suction pipe (9') connected to at least one through opening (5") or to secondary channels made in the wall of said forming part and leading to the internal shaping side (5"') of said forming part (5).

5. The mould device according to any one of claims 1 to 4, **characterized in that** the bidirectional movement of the recessed forming part (5) is achieved by means of a pneumatic or hydraulic jack (10), mounted and positioned on or in the mould portion (3) receiving the recessed forming part (5), the sliding guiding of said part (5) being produced by the jack (10) and/or by an additional special guiding structure.

6. The mould device according to any one of claims 1 to 5, **characterized in that** at least two local deformation means (4) which may or may not be mounted in the same mould portion (3, 3') and which can be activated selectively and independently are provided.

7. The mould device according to any one of claims 1 to 6, **characterized in that** the local deformation means (4) is/are installed on a first mould portion (3) and **in that** the second mould portion (3') has a work surface with a repeated pattern (11), in particular a grained surface, and is provided with distributed suction means enabling a close application by suction of the sheet (2') against said surface with repeated pattern (11).

8. The mould device according to either of claims 4 and 5, **characterized in that** the or each recessed forming part (5) is attached a removable and/or interchangeable manner to the support shaft (9) or the jack rod (10).

9. A method for manufacturing a thin-walled part from a sheet made of a thermoplastic material by using the mould device according to any one of claims 1 to 8, wherein said part may or may not have to include at least one localized zone having a special configuration, said method consisting in putting a sheet, optionally subjected to preheating, between the two mould portions, in closing said mould in order to form a sealed cavity between the two mould portions and optionally preforming said sheet, and in shaping said sheet by plastic deformation by the close application thereof against the surface of one of the portions of the mould under the action of a suction so as to manufacture the part, in opening the mould and in extracting the resulting thermoformed part therefrom,
method **characterized in that** it consists moreover in producing, selectively and as a function of the version of the part (2) to be obtained, if applicable, at least one local deformation of the sheet (2'), after shaping of the sheet (2'), by application against an additional one of the two mould portions (3, 3') and while the latter is in a state allowing the plastic deformation thereof, said local deformation or each local deformation (13) being carried out by suction of the sheet portion (12) in question in a recessed forming part (5) mounted in one of the two mould portions (3, 3') and moved into application against the wall (2") of the sheet (2').

10. The manufacturing method according to claim 9, **characterized in that** the step of producing a local deformation of the sheet (2') consists in performing the following operations:
- moving the recessed forming part (5) from the folded back position thereof to a deployed position in which it bears under controlled pressure against the sheet (2') forming the wall (2") of the part (2);
- applying suction or generating a low pressure in the forming part (5) in such a manner as to locally deform the sheet (2') and flatten it closely against the surface of the inner shaping side (5"') of said forming part (5);
- cutting off the suction or eliminating the low pressure;
- moving the forming part (5) to the folded back position thereof.

11. The manufacturing method according to claim 9 or 10, **characterized in that** it consists in selectively manufacturing, over a predetermined manufacturing period and as a function of a given manufacturing program resulting, for example, from a combination of a variety of client orders in terms of the desired version of the part (1), parts (2) which may or may not comprise one or more local zone(s) (13) with special deformation or configuration.

12. The manufacturing method according to any one of claims 9 to 11, **characterized in that** it consists in interchanging one or more recessed forming part(s) (5) between two cycles or programs for manufacturing parts (2) of different versions, which are supposed to have one or more locally deformed zone(s) (13) of different configuration(s) and appearance(s).
